# EUROPÄISCHE PATENTANMELDUNG

(11) **EP 0 909 674 A2**
(43) Veröffentlichungstag der Anmeldung: **21.04.1999**
(21) Anmeldenummer: 98115885.0
(22) Anmeldetag: 22.08.1998
(51) Int. Cl.: B60K 41/22

(54) **Fahrzeug mit automatisch betätigter Kupplung**

(30) Priorität: 17.10.1997 DE 19745673
(71) Anmelder: DaimlerChrysler AG, 70567 Stuttgart (DE)
(72) Erfinder: Grass, Thomas, 73660 Urbach (DE); Kosik, Franz, 73760 Ostfildern (DE)

(57) **Zusammenfassung**

Für ein Fahrzeug, in dessen Triebstrang ein handgeschaltetes Getriebe mit automatisierter Kupplungsbetätigung liegt, wird zur Unterdrückung von Fehlbetätigungen der Kupplung das die Auslösung der Schaltabsicht detektierende Signal in Bezug auf die Auslösung der entsprechenden Funktion mit einer Sperrzeit belegt.

## Beschreibung

Die Erfindung betrifft ein Fahrzeug mit im Triebstrang zwischen Motor und handgeschaltetem Getriebe liegender, automatisch betätigter Kupplung.

Bei Fahrzeugen der vorgenannten Art, bei denen die Kupplung nicht über ein gesondertes Kupplungspedal, sondern automatisiert in Abhängigkeit und parallel zum über den Handschalthebel herbeigeführten Schaltvorgang betätigt wird, wird der jeweilige Schaltwunsch des Fahrers aus den vom Fahrer dem Schalthebel aufgezwungenen Bewegungen oder auf den Schalthebel ausgeübten Kräften abgeleitet und in entsprechende Steuersignale für die Kupplung umgesetzt, so daß Kupplungsvorgang und Schaltvorgang entsprechend aufeinander abgestimmt ablaufen. Die Erfassung der dem Schalthebel aufgezwungenen Bewegungen und/oder der auf den Schalthebel ausgeübten Kräfte erfolgt über entsprechende Sensoren, wobei die Sensoren in Abhängigkeit von erfaßten Stellungen, Relativlagen, Kräften, Wegen, Geschwindigkeiten und/oder Beschleunigungen Signale abgeben, die direkt oder nach entsprechender Verarbeitung indirekt in Steuersignale für die Kupplung umgesetzt werden. Die Erfassung muß nicht unmittelbar am Schalthebel erfolgen, sondern kann auch an anderer Stelle des Schaltgestänges vorgenommen werden, wobei auch Relativ-Bewegungen und Relativbeschleunigungen zwischen Teilen des Schaltgestänges und/oder den getriebeseitigen und/oder karosserieseitigen Anlenkungen von Schaltgestänge und/oder Schalthebel in Schaltsignale umgesetzt werden können. Beispielsweise kann der Differenzweg zwischen schaltungs- und getriebeseitiger Sensorik in entsprechende Signale umgesetzt werden.

Im Rahmen der praktischen Nutzung des Fahrzeuges wird der Schalthebel aber keineswegs nur in optimaler, und auf die Schaltfunktion ausgerichteter Weise gehandhabt, sondern wird teilweise, entsprechend den jeweiligen Fahrereigenheiten, auch zweckentfremdet als Handauflage oder Abstützung genutzt. Ferner ergeben sich durch abrupte Fahrmanöver, notwendige Bremsvorgänge und dergleichen unabhängig von Schaltvorgängen wie auch innerhalb derselben Schalthebelbetätigungen, die bezüglich der ausgeübten Kräfte und der Schnelligkeit der Schaltbewegung teilweise weit außerhalb der Norm liegen. So kann beispielsweise der Schalthebel vom Fahrer unter Kraftaufwand überdrückt und in der überdrückten Position dann losgelassen werden, mit der Folge, daß Rückfederbewegungen auftreten. Diese Rückfederbewegungen sind fallweise durchaus vergleichbar mit gewollt eingeleiteten Schaltbewegungen, so daß Verwechslungsmöglichkeiten bestehen. In ähnlicher Weise kann schnelles Gengeinlegen zu Fehldeutungen führen, wenn die verwendete Sensorik aufgrund des Überschreitens vorgegebener Geschwindigkeits-, Beschleunigungs- und/oder Kraftschwellen Werte erfaßt, die denen bei der bewußten Ausführung einer Schaltung vergleichbar sind und die deshalb auf eine Schaltabsicht hindeuten. Unter diesem Aspekt können auch die Massoverhältnisse an Schaltung und Getriebe mit den dazwischenliegenden Elastizitäten zu Fehlbeurteilungen Anlaß geben, beispielsweise durch Nachschwingungen nach Loslassen des Schalthebels.

Bei einer bekannten Lösung (DE 43 41 729 A1), bei der eine automatisierte Kupplung in Verbindung mit einem schaltbaren Getriebe eines Kraftfahrzeuges eingesetzt ist, ist zur Vermeidung unbeabsichtigter Betätigungen der Kupplung in Öffnungsrichtung durch Nutzung des Getriebewählhebels als Handabstützung eine Erfassungssensorik vorgesehen, bei der die auf den Wählhebel ausgeübten Kräfte richtungsmäßig erfaßt und daraus abgeleitete Signale in der Folge mit Getriebepositionen auf ihre Plausibilität verglichen werden. Nur wenn diese gegeben ist, wenn also eine konkrete Schaltabsicht erkannt wird, werden Kupplungsvorgange eingeleitet. In deren weiteren Ablauf wird, wenn die Voraussetzungen für das Schließen der Kupplung abgeklärt und gegeben sind, das diesbezügliche Signal nur mit Verzögerung an die Steuereinrichtung weitergeleitet, über die die Kupplung angesteuert wird. Die Verzögerungsspanne wird dabei so bemessen, daß in der Erfassungssensorik sowie in der Schaltmechanik möglicherweise gegebene Toleranzen nicht dazu führen können, daß die Kupplung geschlossen wird, bevor getriebeseitig der Schaltvorgang abgeschlossen ist. Aus Sicherheitsgründen wird also der eigentliche Kupplungsvorgang gespreizt, um Getriebeschäden vorzubeugen.

Durch die Erfindung soll erreicht werden, daß Unregelmäßigkeiten in der Handhabung des Getriebewahl- oder Schalthebels, - wie sie vorstehend angesprochen wurden, nicht zu Betätigungen der Kupplung Anlaß geben, bei denen die Kupplungsbetätigung nicht in Koordination zu beabsichtigten Schalrvorgängen abläuft.

Erreicht wird dies durch die Merkmale des Anspruches 1. Dabei wird davon ausgegangen, daß die Schaltabsicht bei einer gezielt durchgeführten Schaltung Ausgangspunkt für eine entsprechend gezielt durchgeführte Schaltbewegung ist. Ein der Schaltabsicht für eine gezielte Schaltung entsprechendes Signal findet bei einer gezielten Schaltung seine Bestätigung in weiteren entsprechenden Signalen, während nicht aus einer gezielten

Schaltung resultierende Absicht Signale isoliert bleiben. Dementsprechend führt eine Sperrzeit, in der die dem auslösenden Signal entsprechenden Funktionen unterdrückt sind, dazu, das diese Funktionen nicht zur Ausführung gelangen, wenn im Rahmen der Sperrzeit die Voraussetzung für das angesprochene Signal und damit dieses Signal oder eine anderweitige Bestätigung desselben entfällt.

Im Hinblick auf vorstehend angesprochene Fälle erweist es sich in soweit im Rahmen der Erfindung als zweckmäßig, wenn, bezogen auf ein Überdrücken des Schalthebels, die Sperrzeit dann aktiviert wird, wenn der Schalthebel in überdrückter Stellung steht oder der Gang unmittelbar eingelegt wurde.

Die überdrückte Stellung des Schalthebels kann beispielsweise dadurch erkannt werden, daß eine entsprechende (negative) Kraft detektiert wird, oder ein Differenzweg, der auf eine solche Kraft schließen läßt. Eine andere Möglichkeit zum Erkennen des Überdrückens besteht darin, zu erfassen, ob der Schalthebel außerhalb seiner dem jeweiligen Gang entsprechenden Schaltstellung (Sollposition) liegt, die als gelernte oder im Betrieb adaptierte Ruhelage für das Sensoriksystem abgespeichert ist. Eine solche abweichende Position kann indirekt ein Rückschluß auf eine Vorspannung ermöglichen, wie sie bei der überdrückten Stellung des Schalthebels gegeben ist.

Weitere Einzelheiten und Merkmale der Erfindung ergeben sich aus den Ansprüchen. Desweiteren wird die Erfindung mit weiteren Einzelheiten in der nachfolgenden Zeichnungsbeschreibung erläutert. Es zeigen:
- Figur 1: den prinzipiellen Aufbau eines Triebstranges eines Kraftfahrzeuges am Beispiel einer Quermotoranordnung, bei der Motor und Getriebe mit dazwischenliegender Kupplung in Fahrzeugquerrichtung angeordnet sind,
- Figur 2: eine Schemadarstellung mit der Beschreibung einer Fehlinterpretation einer Schaltabsicht bei Überdrücken,
- Figur 3: eine der Figur 2 entsprechende Grunddarstellung, bei auf die Erkennung der vermeintlichen Schaltabsicht folgender Sperrzeit,
- Figur 4: die Beschreibung einer Fehlinterpretation einer Schaltabsicht beim Gangwechsel, und
- Figur 5: eine der Figur 4 entsprechende Darstellung, mit analog zu Figur 3 auf das Erkennen der vermeintlichen Schaltabsicht folgender Sperrzeit.

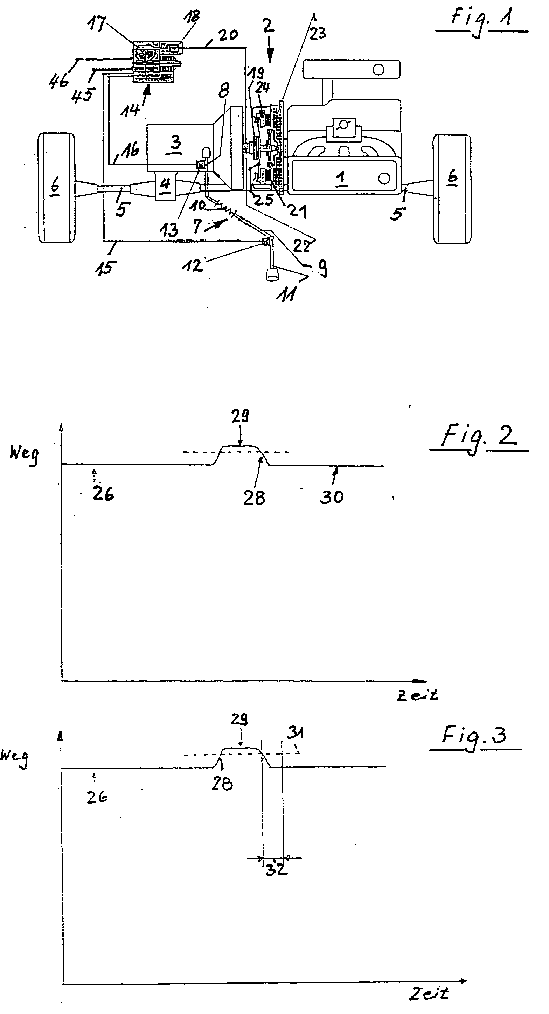

Figur 1 zeigt im Schema den Triebstrang eines Kraftfahrzeuges, insbesondere eines Personenkraftwagens bei quer zur Fahrtrichtung liegender Anordnung, wobei mit 1 der Motor bezeichnet ist, der über eine Kupplung 2 mit dem Getriebe 3 verbunden ist, das seinerseits über ein Ausgleichsgetriebe 4 und seitlich davon ausgehende Antriebswellen 5 die Räder 6 einer Achse antreibt. Die zugehörigen Radaufhängungen sind ebensowenig gezeigt wie sonstige Elemente des Fahrzeuges, in dem ein vorstehend beschriebener Triebstrang üblicherweise als Montageeinheit eingebaut ist und die Vorderachse des Fahrzeuges bildet.

Als Getriebe 3 ist ein handgeschaltetes Getriebe vorgesehen, dessen Betätigungsgestänge insgesamt mit 7 bezeichnet ist und im dargestellten, vereinfachten Ausführungsbeispiel getriebeseitig einen Stellhebel 8 aufweist, der gegenüber dem Getriebe 3 üblicherweise längsverschiebbar und verdrehbar geführt ist und über den die im Getriebe 3 für Schaltoperationen erforderlichen Stellbewegungen vorgenommen oder eingeleitet werden. Der Stellhebel 8 des Betätigungsgestänges 7 ist über ein Übertragungsgestänge 9 mit dem üblicherweise im Fahrerhaus angeordneten Schalthebel 11 verbunden, wobei die im Betätigungsgestänge 7 üblicherweise vorgesehen und teilweise aus kinematischen Gründen auch notwendigen Elastizitäten durch eine im Übertragungsgestänge 9 angeordnete Feder 10 symbolisiert sind. Der Schalthebel 11 ist üblicherweise im Hinblick auf die für Schaltoperationen notwendigen Stellbewegungen über eine Kulisse geführt, die hier nicht dargestellt ist und die entsprechend dem gewählten Schaltschema beispielsweise als sogenannte H-Kulisse ausgeführt sein kann, die im Regelfall für im Schaltvorgang aufeinander folgende Gänge eine ersie Längsgasse aufweist, welche über eine Quergasse mit einer zweiten Längsgasse verbunden ist. Bezogen auf eine solche H-förmige Schaltkulisse sind bei einer besonders gebräuchlichen Anordnung der ersten Längsgasse, jeweils von oben nach unten gesehen, der erste und zweite und der zweiten Längsgasse der dritte und der vierte Gang zugeordnet.

Die entsprechenden Stellbewegungen des Schalthebels 11 und, über diesen eingeleitet, des Stellhebels 8 werden, wie schematisch in Figur 1 angedeutet, über eine Sensorik erfaßt, die, dem Schalthebel 11 zugeordnet, wenigstens einen Sensor 12 zur Erkennung der Schaltabsicht und, dem Stellhebel 8 zugeordnet, wenigstens einen Sensor 13 zur Gangerkennung aufweist. Die Sensorik ist hier nicht näher dargestellt und kann kraft- wie auch wegabhängig arbeitende Linear-Sensoren, Drehwinkelsensoren und andere Sensorelemente umfassen, deren Signale der hier schematisch angedeuteten Steuerung 14 für die automatische Betätigung der Kupplung 2 zugeleitet werden. Die Leitungen zwischen den Sensoren 12 bzw. 13 und der Steuerung 14 sind mit 15 und 16 bezeichnet, und die lediglich schematisch angedeutete Steuerung 14 ist bevorzugt über einen sogenannten Can-Bus 45 mit weiteren Steuergeräten des Fahrzeuges, so beispielsweise dem nicht dargestellten Motorsteuergerät verbunden. Ein weiterer Anschluß 46 führt zum Bremslicht des Fahrzeuges und dient der Verknüpfung mit dem Bremssystem. Angedeutet ist, der Steuerung zugehörig: ferner ein Kupplungswegsensor 17, und ein über einen Stellmotor angesprochener Geberzylinder 18, der mit dem hydraulischen Zentralausrücker 19 der Kupplung 2 über eine Leitung 20 verbunden ist, wobei die Kupplung ansonsten in üblicherweise ausgebildet ist und eine Kupplungsscheibe 21 aufweist, die auf der Eingangswelle 22 des Getriebes drehfest angeordnet ist und zwischen dem motorseitigen Schwungrad 23 und einer Druckplatte 24 liegt, welche über Federmittel 25 bei geschlossener Kupplung in Richtung auf das Schwungrad 23 belastet ist und welche zum Lösen der Kupplung über den Zentralausrücker 19 unter Vermittlung der Federmittel 25 in Gegenrichtung, also von der Schwungrad 23 weg bewegbar ist, so daß die Kupplungsscheibe 21, dem geöffneten Zustand der Kupplung entsprechend, im wesentlichen frei zwischen Druckplatte 24 und Schwungrad 23 durchlaufen kann.

Aus den auf den Schalthebel 11 ausgeübten Kräften bzw. aus den mit dem Schalthebel 11 ausgeführten Bewegungen wird auf die Schaltabsicht rückgeschlossen - Sensorik 12 zur Erkennung der Schaltabsicht, gebildet bevorzugt durch einen Drehwinkelsensor -, und zwar in Berücksichtigung der jeweiligen Getriebestellung, die über die Gangerkennung - Sensorik 13 zur Gangerkennung, gebildet durch je einen Hallsensor in Schaf- und Wählrichtung - erfaßt wird.

Hierbei können sich dann Probleme ergeben, wenn die Handhabung des Schalthebels 11 über den Fahrer nicht dem Regelfall entspricht, so beispielsweise bei sehr schnell oder sehr kräftig ausgeführten Schaltbewegungen oder auch bei Nutzung des Schalthebels quasi als Handstütze in einer erreichten Gangstellung, wobei häufig auch unbewußt auf den Schalthebel 11 z.B. bei Beschleunigungsvorgängen Kräfte ausgeübt werden, die in Richtung auf die jeweilige Endlage in der jeweiligen Schaltgasse zu einem Überdrücken führen. Hierbei wird beispielsweise, bezogen auf den dritten Gang, der Schalthebel unter Ausnutzung der durch die Feder 10 symbolisierten Elastizitäten in Schaltrichtung quasi über seine Endstellung hinausgedrückt, was zwar auf den getriebeseitigen Schaltvorgang ohne Einfluß bleibt, über die Sensorik aber in der Folge zu Fehlinformation führen kann.

Figuren 2 und 3 zeigen jeweils ein Weg-Zeitdiagramm, in dem die Situation des Überdrückens bezogen auf eine Schalthebelstellung dargestellt ist.

Für die Situation des Überdrückens ist davon auszugehen, das eine einem eingelegten Gang entsprechende Stellung des Schalthebels gegeben ist, quasi also eine Ruhelage für den Schalthebel erreicht ist, der Schalthebel über der Zeit keine Bewegung ausführt. Diese Ausgangssituation ist in Figur 2 durch den Kurvenabschnitt 26 symbolisiert. Wird der Schalthebel 10 nun, im Sinne der vorstehenden Darlegungen, überdrückt, d.h. also über diese Ruhelage hinaus in der jeweiligen Schaltrichtung verschwenkt, was aufgrund der Elastizitäten grundsätzlich möglich ist, so ergibt sich für den Schalthebel eine Verlagerung, die durch den Kurvenzug 28 veranschaulicht ist, wobei die Linie 29 die erreichte überdrückte Endlage für den Schalthebel anzeigt. Wird der Schalthebel 10 nun freigegeben, so federt er aufgrund der elastischen Verspannung in die Ausgangslage zurück, nimmt also eine Schalthebelposition ein, die als Verlängerung der Linie 26 durch die Linie 30 symbolisiert ist. Der abgetragene Weg - Linie 26 zu Linie 29 - entspricht dabei dem Differenzweg, der sich durch die Elastizität zwischen Fahrzeug und Getriebe im Betätigungsgestänge ergibt.

Beim Zurückfedern aus der durch Überdrücken erreichten Grenzlage (Linie 29) - nach Loslassen des Schaltnebels 8 - können sich Beschleunigungen ergeben, die als Einleitung einer in Rückfederungsrichtung verlaufenden Schaltbewegung verstanden werden, eine entsprechende Interpretation kann aber auch rein wegabhängig zustande kommen. Tatsächlich leitet die Rückfederung aus der überdrückten Stellung aber keinen neuen Schaltvorgang ein, sondern bedeutet nur eine Normalisierung der jeweiligen Schalthebelbelastung.

Um bei einer solchen Fehlinterpretation eine entsprechende Fehlfunktion - Öffnen der Kupplung - zu vermeiden, wird die entsprechende Schaltabsichtserkennung (Sensorik 12) bezüglich ihrer Funktion mit einer Sperrzeit belegt. Dies veranschaulicht Figur 3, die ansonsten der Figur 2 entspricht, in der aber zusätzlich dargestellt ist, daß bei Überdrücken des Schalthebels 10 über eine Ruhelage hinaus dann eine Sperrzeit für die Schaltabsichtserkennung gesetzt wird, wenn eine vorgegebener Grenzwert - hier durch die strichlierte Linie 31 veranschaulicht in Rückfederrichtung unterschritten wird. Diese Sperrzeit ist in Figur 3 symbolisch als Festwert dargestellt, kann aber auch als Festwert festgelegt werden, der in Anpassung an sonstige Parameter innerhalb vorgegebener Grenzen verändert wird.

Desweiteren ist es im Rahmen der Erfindung grundsätzlich auch möglich, die Beendigung der Sperrzeit davon abhängig zu machen, daß die aufgrund der Rückfederung zunächst fälschlich angenommene Schaltabsicht bei tatsächlicher Durchführung des Schaltvorganges bestätigt wird. Die Sperrzeit ist in Figur 3 bei 32 veranschaulicht.

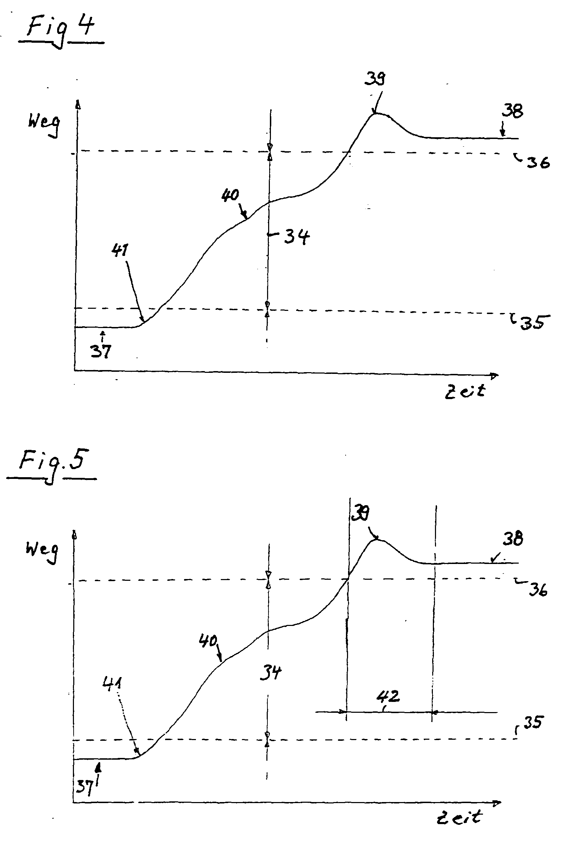

Grundsätzlich ähnliche Situationen können sich beim Gangwechsel ergeben, wie er in Figuren 4 und 5 veranschaulicht ist. Durch die strichpunktierten Linien 35 und 36 sind dabei Grenzlagen für den Schalthebel vorgegeben, die einem jeweiligen Gang zugeordnet sind, und zwischen denen ein neutraler Bereich 34 liegt, der beim Gangwechsel durchfahren werden muß.

Ausgehend von einer der Schalthebelposition in der Ruhelage entsprechenden Stellung 37 wird zunächst die Grenzlage 35 für diesen Gang durchfahren, danach die neutrale Zone 34 und bei Überschreiten der Grenzlage 36 für den Gang, in den geschaltet werden soll, ist eine der Schalthebelposition dieses Ganges entsprechende Ruhelage nahezu erreicht. Aufgrund des Bewegungsablaufes aber auch aufgrund eines Nachschwingens oder dergleichen kann diese der Ruhelage entsprechende Position 38 zunächst überfahren werden, so daß, ähnlich wie beim Überdrücken, eine Extremposition 39 erreicht wird, aus der der Schalthebel wieder in seine der Ruhelage entsprechende Position 38 zurückschwingt.

Die Erkennung der Schaltabsicht erfolgt beim Gangwechsel im Bereich des Überganges aus der der Ruhelage 37 entsprechenden Position in den Übergangsbereich 40, wobei die entsprechende Signalauslösung durch den Pfeil 41 symbolisiert ist. Ein entsprechender Bewegungsablauf bzw. entsprechende Beschleunigungen treten auf, wenn der Schalthebel aus seiner überschwungenen Position 39 in die der Ruhelage 38 entsprechende Stellung zurückgeht. Um eine Mißdeutung dieses Bewegungsablaufes als Schaltabsicht dann auszuschließen, wenn eine solche Schaltabsicht nicht besteht, wird erfindungsgemäß eine Sperrzeit gesetzt, wie dies in Figur 5 durch 42 symbolisiert ist. Die Sperrzeit beginnt, wenn der Schalthebel die dem entsprechenden Gang zugeordnete Grenzlage 36 durchläuft und ist bei fest vorgegebenem Wert vorzugsweise so bemessen, daß der Rückschwingvorgang ausgelaufen ist, wenn die Sperrzeit endet. Während der Sperrzeit ist eine Interpretation des jeweiligen Auslösesignales im Sinne Öffnen der Kupplung unterbunden, die entsprechende Funktion kann ausgelöst durch dieses Signal also nicht durchgeführt werden.

Auch in diesem Zusammenhang ist es möglich, die Sperrzeit erst dann zu beenden, wenn, mit gewissem Zeitverzug, ein weiteres Signal die zunächst fälschlich angenommene Schaltabsicht als tatsächliche Schaltabsicht bestätigt. In diesem Fall ist die Sperrzeit also nicht vorgegeben, sondern wird fallbezogen beendet.

## Patentansprüche

1. Fahrzeug mit im Triebstrang zwischen Motor und handgeschaltetem Getriebe liegender, automatisch betätigter Kupplung, bei der der Kupplungsvorgang über den Schalthebel des Getriebes synchron zum jeweils eingeleiteten Schaltvorgang angestoßen ist und die jeweilige Schaltabsicht aus Signalen detektierbar ist die über den Schalthebel stellungs-, relativlage-, kraft-, masse-, weg-, geschwindigkeits- und/oder beschleunigungsabhängig direkt oder indirekt auslösbar sind wobei Sollpositionen des Schalthebels (11) entsprechende Signale für über diese Signale auszulösende Funktionen dann eine Sperrzeit auslösen, wenn die Schaltabsicht ausgehend von oder in Verbindung mit einer Abweichung vom Soll- bzw. Normalzustand des Schalthebels (11) und/oder des damit verbundenen Betätigungsgestänges (9) detektiert wird.

2. Fahrzeug nach Anspruch 1,
**dadurch gekennzeichnet,**
daß die von der Sollposition abweichende Stellung des Sschalthebels (11) eine überdrückte Stellung ist.

3. Fahrzeug nach Anspruch 1 oder 2,
**dadurch gekennzeichnet,**
daß die während der Sperrzeit unterdrückte Funktion nach Ablauf der Sperrzeit (32, 42) nur ausgeübt wird, wenn die Voraussetzungen für das die Schaltabsicht detektierende Signal fortbestehen oder erneut gegeben sind.

4. Fahrzeug nach einem der vorhergehenden Ansprüche,
**dadurch gekennzeichnet,**
daß die Sperrzeit (32, 42) eine vorgegebene Größe ist.

5. Fahrzeug nach Anspruch 4,
**dadurch gekennzeichnet,**
daß die vorgegebene Sperrzeit in ihrer Größe variabel ist.

6. Fahrzeug nach einem der Ansprüche 1 bis 3,
**dadurch gekennzeichnet,**
daß die während der Sperrzeit unterdrückte Funktion nach Ablauf der Sperrzeit nur bei Bestätigung über ein weiteres Signal ausgeübt wird.

7. Fahrzeug nach Anspruch 6,
**dadurch gekennzeichnet,**
daß die Sperrzeit variabel ist.

8. Fahrzeug nach Anspruch 6 oder 7,
**dadurch gekennzeichnet,**
daß die Sperrzeit durch ein in zeitlichem Abstand auf das die Sperrzeit auslösende Signal folgendes Signal beendet wird.
